# EUROPEAN PATENT APPLICATION

(11) **EP 4 852 272 A1**
(43) Date of publication of application: **09.12.2026**
(21) Application number: 24926588.5
(22) Date of filing: 14.06.2024
(51) Int. Cl.: H02J 7/00, H01M 10/44

(54) **CHARGING AND DISCHARGING POWER ALLOCATION METHOD, APPARATUS AND DEVICE FOR ENERGY STORAGE DEVICE, AND STORAGE MEDIUM**

(30) Priority: 29.02.2024 CN 202410224312
(71) Applicant: Contemporary Amperex Technology Co., Limited, Ningde, Fujian 352100 (CN)
(72) Inventor: CUI, Hao, Ningde, Fujian 352100 (CN); ZENG, Ji, Ningde, Fujian 352100 (CN); LIU, Gang, Ningde, Fujian 352100 (CN)
(74) Representative: Lorenz Seidler Gossel Part. mbB
(86) International application number: PCT/CN2024/099336
(87) International publication number: WO 2025/179717

(57) **Abstract**

The present application relates to a charging and discharging power allocation method, apparatus and device for an energy storage device, and a storage medium. The method comprises: obtaining the total charging and discharging power allocated to battery clusters in an energy storage device; and allocating the total charging and discharging power with the objectives of optimizing the charging and discharging efficiency of the battery clusters of the energy storage device and balancing the cycle counts of the battery clusters, to obtain sub charging and discharging power allocated to the battery clusters. The method further comprises: on the basis of the sub charging and discharging power allocated to the battery clusters, controlling the battery clusters to charge or discharge. Thus, in the embodiments of the present application, when the battery clusters charge and discharge on the basis of the allocated sub charging and discharging power, the charging and discharging efficiency of the battery clusters can be optimized and the cycle counts of the battery clusters can be balanced, helping to prolong the operational life of the energy storage system while achieving the overall efficiency-optimized operation of the energy storage system.

## Description

### CROSS-REFERENCE

The present application refers to Chinese Patent Application No. 2024102243124, filed on February 29, 2024, and entitled "CHARGE AND DISCHARGE POWER ALLOCATION METHOD, APPARATUS, AND DEVICE FOR ENERGY STORAGE DEVICE, AND STORAGE MEDIUM", which is incorporated herein by reference in its entirety.

### TECHNICAL FIELD

The present application relates to the technical field of energy storage, and in particular, to a charge and discharge power allocation method, apparatus, and device for an energy storage device, and a storage medium.

### BACKGROUND

With the development of new energy technologies, the application of energy storage devices for new energy power generation has become increasingly widespread. The energy storage device includes a plurality of battery clusters, and the charging and discharging balance of the plurality of battery clusters has a great influence on the normal operation of the energy storage device. Therefore, how to manage the charging and discharging balance of a plurality of battery clusters is an important research direction.

In the related art, state of charge (SOC) balancing management for the battery clusters is achieved based on the SOC of each battery cluster. However, in the related art, there is a problem that the service lives of different battery clusters are unbalanced.

### SUMMARY

In view of the above problem, the present application provides a charge and discharge power allocation method, apparatus, and device for an energy storage device, and a storage medium, which can solve the problem in the related art that the service lives of different battery clusters are unbalanced.

In a first aspect, the present application provides a charge and discharge power allocation method for an energy storage device. The method includes: obtaining a total charge and discharge power allocated to battery clusters in the energy storage device; allocating, with optimizing charge and discharge efficiencies of the respective battery clusters of the energy storage device and balancing cycle counts among the battery clusters as allocation objectives, the total charge and discharge power, to obtain sub charge and discharge powers allocated to the respective battery clusters; and controlling, based on the sub charge and discharge powers allocated to the respective battery clusters, the battery clusters to perform charging and discharging.

In the technical solutions of the embodiments of the present application, the total charge and discharge power is allocated with optimizing the charge and discharge efficiencies of the respective battery clusters of the energy storage device and balancing the cycle counts among the battery clusters as allocation objectives, to obtain the sub charge and discharge powers allocated to the respective battery clusters, such that when the respective battery clusters perform charging and discharging according to the allocated sub charge and discharge powers, the charge and discharge efficiencies of the respective battery clusters can be optimized, and the cycle counts among the battery clusters can be balanced, thereby helping prolong the service life of the energy storage system while enabling the energy storage system to operate with optimal overall efficiency.

In some embodiments, allocating, with optimizing the charge and discharge efficiencies of the respective battery clusters of the energy storage device and balancing the cycle counts among the battery clusters as allocation objectives, the total charge and discharge power, to obtain the sub charge and discharge powers allocated to the respective battery clusters includes: grouping, based on states of charge (SOCs) of the respective battery clusters, the battery clusters into at least one battery cluster group, where different battery cluster groups have different charge and discharge priorities; determining, based on the total charge and discharge power and charge and discharge power limits corresponding to the respective battery cluster groups, at least one target battery cluster group for charging and discharging from the at least one battery cluster group, and target charge and discharge powers corresponding to the respective target battery cluster groups; and for each target battery cluster group, allocating, with optimizing charge and discharge efficiencies of the respective battery clusters in the target battery cluster group and balancing cycle counts among the battery clusters as allocation objectives, a target charge and discharge power corresponding to the target battery cluster group, to obtain sub charge and discharge powers allocated to the respective battery clusters in the target battery cluster group.

In the technical solutions of the embodiments of the present application, the at least one target battery cluster group for charging and discharging and the target charge and discharge powers corresponding to the respective target battery cluster groups are determined based on the SOCs of the respective battery clusters, the total charge and discharge power, and the charge and discharge power limits corresponding to the respective battery cluster groups. Moreover, the target charge and discharge powers corresponding to the respective target battery cluster groups are allocated with optimizing the charge and discharge efficiencies of the respective battery clusters in the target battery cluster group and balancing the cycle counts among the battery clusters as allocation objectives, to obtain the sub charge and discharge powers allocated to the respective battery clusters in each target battery cluster group. In this way, when the respective battery clusters in the target battery cluster group for charging and discharging perform charging and discharging according to the allocated sub charge and discharge powers, the charge and discharge efficiencies of the respective battery clusters of the energy storage device can be optimized, and the cycle counts among the battery clusters can be balanced, and the efficiency of power allocation can also be improved.

In some embodiments, allocating, with optimizing the charge and discharge efficiencies of the respective battery clusters in the target battery cluster group and balancing the cycle counts among the battery clusters as allocation objectives, the target charge and discharge power corresponding to the target battery cluster group, to obtain the sub charge and discharge powers allocated to the respective battery clusters in the target battery cluster group includes: obtaining an objective function, where the objective function includes an imbalance degree term of historical charge and discharge capacities of the respective battery clusters in the target battery cluster group and a charge and discharge power loss term of the respective battery clusters in the target battery cluster group; and solving, based on a preset constraint condition and with minimizing a value of the objective function as an objective, the objective function, to obtain the sub charge and discharge powers allocated to the respective battery clusters in the target battery cluster group.

In the technical solutions of the embodiments of the present application, the objective function is solved based on the preset constraint condition and with minimizing the value of the objective function including the imbalance degree term and the charge and discharge power loss term, to obtain the sub charge and discharge powers allocated to the respective battery clusters in the target battery cluster group, such that the charge and discharge efficiencies of the respective battery clusters can be further optimized, and the cycle counts among the battery clusters can be further balanced, thereby helping further prolong the service life of the energy storage system while enabling the energy storage system to operate with optimal overall efficiency.

In some embodiments, obtaining the imbalance degree term of the historical charge and discharge capacities of the respective battery clusters in the target battery cluster group includes: obtaining, based on total historical charge and discharge capacities and corresponding sub charge and discharge powers of the respective battery clusters in the target battery cluster group, imbalance degrees of the historical charge and discharge capacities of the respective battery clusters in the target battery cluster group; and obtaining, based on an energy storage system cost per unit of charge and discharge capacity and the imbalance degrees of the historical charge and discharge capacities of the respective battery clusters in the target battery cluster group, the imbalance degree term.

In the technical solutions of the embodiments of the present application, the imbalance degree term is related to the imbalance degrees of the total historical charge and discharge capacities of the respective battery clusters. That is, the imbalance degree term may be used to indicate the balance of the cycle counts among the battery clusters, such that solving the objective function including the imbalance degree term can achieve the purpose of balancing the cycle counts among the battery clusters.

In some embodiments, obtaining the charge and discharge power loss term of the respective battery clusters in the target battery cluster group includes: obtaining, based on an electricity price per unit of power and sub charge and discharge powers corresponding to the respective battery clusters in the target battery cluster group, the charge and discharge power loss term, such that solving the objective function including the charge and discharge power loss term can achieve the purpose of optimizing the charge and discharge efficiencies of the respective battery clusters.

In some embodiments, the preset constraint condition includes: a first power constraint condition and a second power constraint condition, where the first power constraint condition is that a sum of sub charge and discharge powers corresponding to the respective battery clusters in the target battery cluster group is equal to a target charge and discharge power corresponding to the target battery cluster group; and the second power constraint condition is that the sub charge and discharge powers corresponding to the respective battery clusters in the target battery cluster group are within a preset sub charge and discharge power limit range.

In some embodiments, determining, based on the total charge and discharge power and the charge and discharge power limits corresponding to the respective battery cluster groups, the at least one target battery cluster group for charging and discharging from the at least one battery cluster group, and the target charge and discharge powers corresponding to the respective target battery cluster groups includes: determining, based on the total charge and discharge power, a first candidate battery cluster having a highest charge and discharge priority from the at least one battery cluster group; and if an absolute value of a charge and discharge power limit corresponding to the first candidate battery cluster is greater than an absolute value of the total charge and discharge power, using the first candidate battery cluster as the target battery cluster group, and using the total charge and discharge power as a target charge and discharge power corresponding to the target battery cluster group.

In some embodiments, determining, based on the total charge and discharge power and the charge and discharge power limits corresponding to the respective battery cluster groups, the at least one target battery cluster group for charging and discharging from the at least one battery cluster group, and the target charge and discharge powers corresponding to the respective target battery cluster groups further includes: if the absolute value of the charge and discharge power limit corresponding to the first candidate battery cluster is not greater than the absolute value of the total charge and discharge power, using the first candidate battery cluster as a first target battery cluster group, and using the charge and discharge power limit corresponding to the first candidate battery cluster as the target charge and discharge power corresponding to the first target battery cluster group; determining a second candidate battery cluster having a second-highest charge and discharge priority from the at least one battery cluster group; and if an absolute value of a charge and discharge power limit corresponding to the second candidate battery cluster is greater than a preset absolute value, using the second candidate battery cluster as a second target battery cluster group, and using a difference between the total charge and discharge power and the charge and discharge power limit corresponding to the first candidate battery cluster as a target charge and discharge power corresponding to the second target battery cluster group, where the preset absolute value is an absolute value of the difference between the total charge and discharge power and the charge and discharge power limit corresponding to the first candidate battery cluster.

In some embodiments, grouping, based on the SOCs of the respective battery clusters, the battery clusters into the at least one battery cluster group includes: grouping, based on the SOCs of the respective battery clusters and a plurality of preset charge and discharge thresholds, the battery clusters into the at least one battery cluster group.

In some embodiments, grouping, based on the SOCs of the respective battery clusters and the plurality of preset charge and discharge thresholds, the battery clusters into the at least one battery cluster group includes: determining, based on the total charge and discharge power, a plurality of target charge and discharge thresholds from the plurality of preset charge and discharge thresholds; and grouping, based on the SOCs of the respective battery clusters and the plurality of target charge and discharge thresholds, the battery clusters into the at least one battery cluster group.

In some embodiments, obtaining the total charge and discharge power allocated to the battery clusters in the energy storage device includes: obtaining a power dispatch request value; and determining, based on the power dispatch request value and a total generated power of a power generation device, the total charge and discharge power.

In some embodiments, controlling, based on the sub charge and discharge powers allocated to the respective battery clusters, the battery clusters to perform charging and discharging includes: for each battery cluster, sending a sub charge and discharge power corresponding to the battery cluster to a direct current (DC)-to-DC converter (DC/DC) corresponding to the battery cluster, so as to control the DC/DC to perform charging and discharging with a power grid.

In a second aspect, the present application provides a charge and discharge power allocation apparatus for an energy storage device. The apparatus includes: an obtaining module, configured to obtain a total charge and discharge power allocated to battery clusters in the energy storage device; an allocation module, configured to allocate, with optimizing charge and discharge efficiencies of the respective battery clusters of the energy storage device and balancing cycle counts among the battery clusters as allocation objectives, the total charge and discharge power, to obtain sub charge and discharge powers allocated to the respective battery clusters; and a control module, configured to control, based on the sub charge and discharge powers allocated to the respective battery clusters, the battery clusters to perform charging and discharging.

In a third aspect, the present application provides a charge and discharge power allocation device for an energy storage device. The charge and discharge power allocation device includes a memory and a processor. The memory has a computer program stored therein, and the processor, when executing the computer program, implements the steps in the above embodiments of the charge and discharge power allocation method for an energy storage device.

In a fourth aspect, the present application provides a computer-readable storage medium. The computer-readable storage medium has a computer program stored thereon, and the computer program, when executed by a processor, causes the processor to implement the steps in the above embodiments of the charge and discharge power allocation method for an energy storage device.

The above description is only an overview of the technical solutions of the present application. To more clearly understand the technical means of the present application to enable implementation in accordance with the content of the specification and to make the above and other purposes, features, and advantages of the present application more obvious and easy to understand, the detailed description of the present application is provided below.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the present application. Furthermore, the same reference numerals in all the drawings denote identical components. In the drawings:
FIG. 1 is a first schematic structural diagram of a charge and discharge power allocation system according to the embodiments of the present application;
FIG. 2 is a second schematic structural diagram of a charge and discharge power allocation system according to the embodiments of the present application;
FIG. 3 is a schematic flowchart of a charge and discharge power allocation method for an energy storage device according to some embodiments of the present application;
FIG. 4 is a schematic flowchart of a charge and discharge power allocation method for an energy storage device according to some other embodiments of the present application;
FIG. 5 is a schematic flowchart of a charge and discharge power allocation method for an energy storage device according to some other embodiments of the present application;
FIG. 6 is a schematic flowchart of a charge and discharge power allocation method for an energy storage device according to some other embodiments of the present application;
FIG. 7 is a schematic structural diagram of a charge and discharge power allocation apparatus according to some embodiments of the present application; and
FIG. 8 is a schematic structural diagram of a charge and discharge power allocation device according to some embodiments of the present application.

### DETAILED DESCRIPTION

Embodiments of the technical solutions of the present application will be described in detail below with reference to the drawings. The following embodiments are only used to more clearly illustrate the technical solutions of the present application, and therefore, are only exemplary and do not limit the protection scope of the present application.

Unless otherwise defined, all technical and scientific terms used herein have the same meanings as commonly understood by those skilled in the technical field to which the present application belongs. The terms used herein are only used to illustrate the specific embodiments, rather than limit the present application. The terms "include", "comprise", and any variants thereof, in the specification and claims of the present application and the above description of the drawings are intended to cover non-exclusive inclusions.

In the description of the embodiments of the present application, the technical terms such as "first" and "second" are only used to distinguish different objects and should not be interpreted as indicating or implying the relative importance or implicitly indicating the number, specific order, or priority of the technical features referred to. In the description of the embodiments of the present application, unless otherwise specifically defined, the term "plurality of" means no less than two (including two).

The charge and discharge power allocation method, apparatus, and device for an energy storage device, and the storage medium according to the embodiments of the present application can be applied to application scenarios for charge and discharge power allocation of an energy storage device in the case of new energy power generation or conventional energy power generation, for example, an application scenario for charge and discharge power allocation of an industrial energy storage device, an application scenario for charge and discharge power allocation of a household energy storage device, or an application scenario for charge and discharge power allocation of an energy storage device at a charging station.

It should be noted that, for ease of description, the following embodiments are described by taking the method according to the embodiments of the present application being applied to an application scenario for charge and discharge power allocation of an energy storage device in the case of new energy power generation as an example. It should be understood that when the charge and discharge power allocation method, apparatus, and device for an energy storage device, and the storage medium according to the embodiments of the present application are applied to other scenarios, the implementation principles and technical effects are similar.

For example, the new energy power generation in the embodiments of the present application may include, but is not limited to, photovoltaic power generation and/or wind power generation. For ease of description, in the following embodiments of the present application, an example in which new energy power generation includes photovoltaic power generation is used for description.

Generally, the energy storage device includes a plurality of battery clusters, and the charging and discharging balance of the plurality of battery clusters has a great influence on the normal operation of the energy storage device. Therefore, how to manage the charging and discharging balance of a plurality of battery clusters is an important research direction.

In the related art, state of charge (SOC) balancing management for the battery clusters is achieved based on the SOC of each battery cluster. However, in the related art, there is a problem that the service lives of different battery clusters are unbalanced. Some battery clusters may reach the end of service life earlier, resulting in the energy storage system being unable to operate normally.

To solve the problem in the related art that the service lives of different battery clusters are unbalanced, the embodiments of the present application provide a method of allocating the total charge and discharge power with optimizing the charge and discharge efficiencies of the respective battery clusters of the energy storage device and balancing the cycle counts among the battery clusters as allocation objectives, to obtain the sub charge and discharge powers allocated to the respective battery clusters, such that when the respective battery clusters perform charging and discharging according to the allocated sub charge and discharge powers, the charge and discharge efficiencies of the respective battery clusters can be optimized, and the cycle counts among the battery clusters can be balanced. This helps prolong the service life of the energy storage system while enabling the energy storage system to operate with optimal overall efficiency.

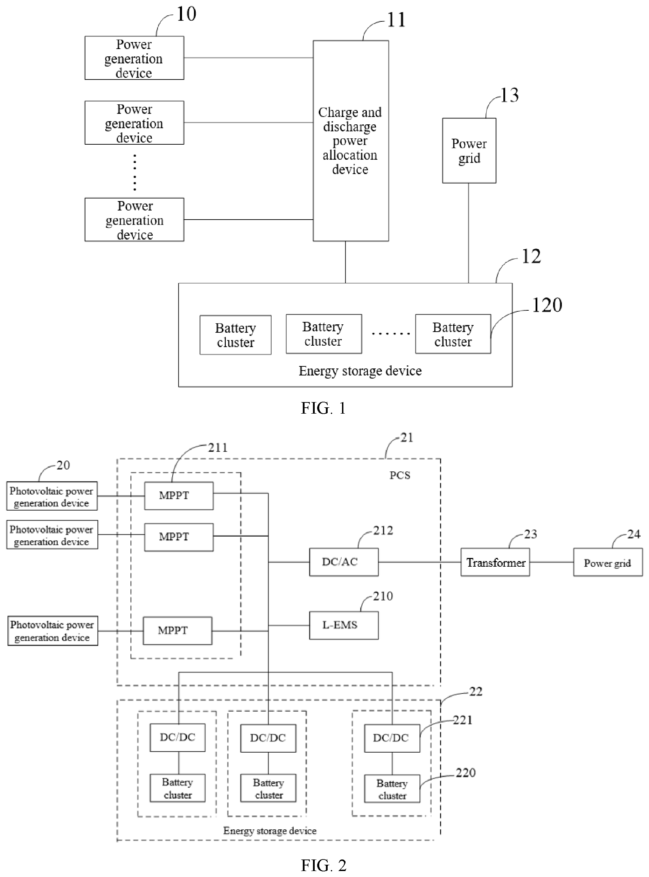

FIG. 1 is a first schematic structural diagram of a charge and discharge power allocation system according to the embodiments of the present application. As shown in FIG. 1, the charge and discharge power allocation system according to the embodiments of the present application may include, but is not limited to: a plurality of power generation devices 10, a charge and discharge power allocation device 11, an energy storage device 12, and a power grid 13. The energy storage device 12 may include, but is not limited to, a plurality of battery clusters (or referred to as racks) 120, and each battery cluster 120 may include a plurality of connected battery packs (or referred to as packs).

The charge and discharge power allocation device 11 in the embodiments of the present application may adopt the charge and discharge power allocation method for an energy storage device according to the embodiments of the present application to control the energy storage device 12 to perform charging and discharging. It should be understood that, in the case where the energy storage device 12 is in a charging state, the energy storage device 12 may be configured to store electric energy generated by the power generation device 10. In the case where the energy storage device 12 is in a discharging state, the energy storage device 12 may be configured to release the electrical energy stored in the energy storage device 12 to the power grid 13.

FIG. 2 is a second schematic structural diagram of a charge and discharge power allocation system according to the embodiments of the present application. As shown in FIG. 2, the charge and discharge power allocation system according to the embodiments of the present application may include, but is not limited to: a plurality of photovoltaic power generation devices 20, a power conversion system (PCS) 21, an energy storage device 22, a transfer 23, and a power grid (Grid) 24. It should be understood that the charge and discharge power allocation system in the embodiments of the present application may also be referred to as a DC-coupled PV-storage system.

The PCS 21 may control the charging and discharging processes of the energy storage device 22 to perform conversion between alternating current (AC) and direct current (DC). For example, the PCS 21 may include, but is not limited to: a local-energy management system (L-EMS) 210, maximum power point tracking (MPPT) 211, and a DC-to-AC converter (DC/AC) 212. The MPPT 211 can regulate the operating point of the photovoltaic power generation device, so as to enable the photovoltaic power generation device to always output maximum power. It should be understood that the MPPT 211 in the embodiments of the present application may alternatively be independent of the PCS 21 and be disposed between the photovoltaic power generation device 20 and the PCS 21.

It should be noted that the charge and discharge power allocation device in the embodiments of the present application may include, but is not limited to, the local-energy management system 210 in the power conversion system 21. The local-energy management system 210 in the embodiments of the present application may adopt the charge and discharge power allocation method for an energy storage device according to the embodiments of the present application to control the energy storage device 22 to perform charging and discharging.

The transfer 23 may be configured to convert electric energy from the energy storage device 22 and/or the photovoltaic power generation device 20 and then transmit the converted electric energy to the power grid 24.

The energy storage device 22 may include, but is not limited to, a plurality of battery clusters (or referred to as racks) 220, and the respective battery clusters 220 may be connected to the power conversion system 21 via corresponding DC/DCs 221. It should be understood that the respective battery clusters 220 and the corresponding DC/DCs 221 may be independently disposed in corresponding electrical cabinets, respectively, or a plurality of battery clusters 220 and their corresponding DC/DCs 221 may be disposed together in the same electrical cabinet.

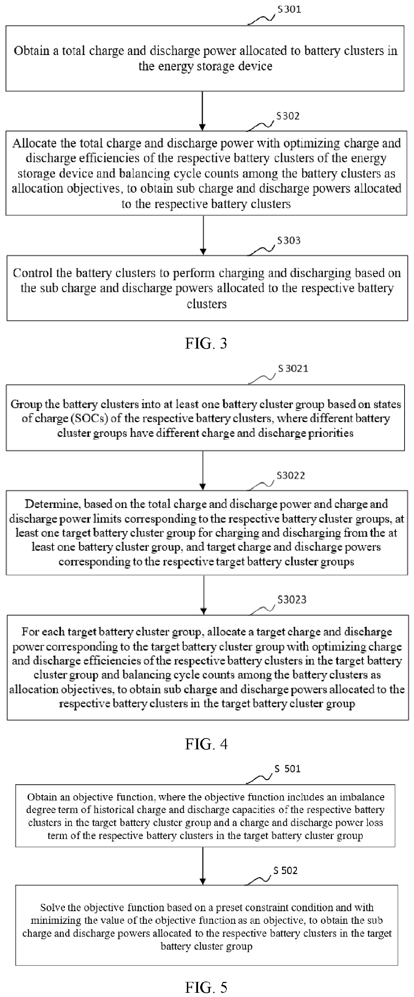

In some embodiments, FIG. 3 is a schematic flowchart of a charge and discharge power allocation method for an energy storage device according to some embodiments of the present application. In the embodiments of the present application, an example in which the method is applied to the charge and discharge power allocation device described above is used for description. As shown in FIG. 3, the method according to the embodiments of the present application may include the following steps.

In step S301, a total charge and discharge power allocated to battery clusters in the energy storage device is obtained.

In this step, the charge and discharge power allocation device may obtain the total charge and discharge power allocated to battery clusters in the energy storage device. It should be understood that the total charge and discharge power in the embodiments of the present application may be a positive number, a negative number, or zero. In the case where the total charge and discharge power is a positive number, the energy storage device needs to perform discharging; in the case where the total charge and discharge power is a negative number, the energy storage device needs to perform charging; and in the case where the total charge and discharge power is zero, the energy storage device does not need to perform charging or discharging.

In a possible implementation, a power dispatch request value is obtained, and the total charge and discharge power is determined based on the power dispatch request value and a total generated power of the power generation device.

The power dispatch request value in the embodiments of the present application may be used to indicate an active power value requested for dispatch.

In the implementation, the charge and discharge power allocation device may obtain a power dispatch request value from a dispatch device (or referred to as a station-level energy management system (EMS)), and use the difference between the power dispatch request value and the total generated power of the power generation devices (for example, photovoltaic power generation devices in FIG. 2) in the charge and discharge power allocation system as the total charge and discharge power.

It should be understood that the charge and discharge power allocation method for an energy storage device according to the embodiments of the present application is applied to an application scenario for charge and discharge power allocation of an energy storage device in an electric device. That is, in the case where a power generation device is not included in the charge and discharge power allocation system, the charge and discharge power allocation device may use the power dispatch request value as the total charge and discharge power.

In another possible implementation, the charge and discharge power allocation device may obtain the total charge and discharge power from the dispatch device.

Certainly, the charge and discharge power allocation device may also obtain the total charge and discharge power through other methods.

In step S302, the total charge and discharge power is allocated with optimizing charge and discharge efficiencies of the respective battery clusters of the energy storage device and balancing cycle counts among the battery clusters as allocation objectives, to obtain sub charge and discharge powers allocated to the respective battery clusters.

The cycle count of the battery cluster in the embodiments of the present application may refer to the number of life cycles that the battery cluster has undergone (or simply referred to as the cycle count).

In this step, the charge and discharge power allocation device may allocate the total charge and discharge power with optimizing the charge and discharge efficiencies of the respective battery clusters of the energy storage device and balancing the cycle counts among the battery clusters as allocation objectives, to obtain the sub charge and discharge powers allocated to the respective battery clusters, such that when the respective battery clusters perform charging and discharging according to the allocated sub charge and discharge powers, the charge and discharge efficiencies of the respective battery clusters can be optimized, and the cycle counts (or referred to as historical charge and discharge capacities) among the battery clusters can be balanced. This helps prolong the service life of the energy storage system while enabling the energy storage system to operate with optimal overall efficiency, thereby maximizing the economic benefits of the energy storage system.

It should be understood that the sub charge and discharge power allocated to any battery cluster in the embodiments of the present application may include, but is not limited to, a positive number, a negative number, or zero. If the sub charge and discharge power allocated to any battery cluster is a positive number, the battery cluster needs to perform discharging; if the sub charge and discharge power allocated to any battery cluster is a negative number, the battery cluster needs to perform charging; or if the sub charge and discharge power allocated to any battery cluster is zero, the battery cluster does not need to perform charging or discharging.

In a possible implementation, the charge and discharge power allocation device may group the battery clusters of the energy storage device into a plurality of battery cluster groups, and determine at least one target battery cluster group for charging and discharging from the plurality of battery cluster groups. Further, the charge and discharge power allocation device may allocate the total charge and discharge power with optimizing the charge and discharge efficiencies of the respective battery clusters in each target battery cluster group and balancing the cycle counts among the battery clusters as allocation objectives, to obtain the sub charge and discharge powers allocated to the respective battery clusters in each target battery cluster group.

It can be seen that, in the implementation, the charge and discharge power allocation device allocates power only to the battery clusters in the selected target battery cluster groups, which can not only improve the efficiency of charge and discharge power allocation, but also prolong the service life of each battery cluster in the energy storage system.

In another possible implementation, the charge and discharge power allocation device may regard each battery cluster of the energy storage device as a battery cluster group, and directly allocate the total charge and discharge power, with optimizing charge and discharge efficiencies of the respective battery clusters and balancing cycle counts among the battery clusters as allocation objectives, to obtain sub charge and discharge powers allocated to the respective battery clusters.

Certainly, with optimizing the charge and discharge efficiencies of the respective battery clusters of the energy storage device and balancing the cycle counts among the battery clusters as allocation objectives, the charge and discharge power allocation device may further allocate the total charge and discharge power through other methods.

In step S303, the battery clusters are controlled, based on the sub charge and discharge powers allocated to the respective battery clusters, to perform charging and discharging.

In this step, the charge and discharge power allocation device may control, based on the sub charge and discharge powers allocated to the respective battery clusters, the battery clusters to perform charging and discharging according to the allocated sub charge and discharge powers. It should be understood that, if the sub charge and discharge power allocated to any battery cluster is a positive number, the charge and discharge power allocation device may control the battery cluster to perform discharging according to the sub charge and discharge power; if the sub charge and discharge power allocated to any battery cluster is a negative number, the charge and discharge power allocation device may control the battery cluster to perform charging according to the sub charge and discharge power; or if the sub charge and discharge power allocated to any battery cluster is zero, the charge and discharge power allocation device may control the battery cluster not to perform charging and discharging.

In a possible implementation, for each battery cluster, a sub charge and discharge power corresponding to the battery cluster is sent to a DC/DC corresponding to the battery cluster, so as to control the DC/DC to perform charging and discharging with a power grid.

In the implementation, in the case where the respective battery clusters are connected to the charge and discharge power allocation device via corresponding DC/DCs, for each battery cluster, the charge and discharge power allocation device may send a sub charge and discharge power corresponding to the battery cluster to a DC/DC corresponding to the battery cluster, so as to control the DC/DC to perform charging and discharging with the power grid according to the sub charge and discharge power.

It can be seen that, in the implementation, the charge and discharge power allocation device sends the sub charge and discharge powers corresponding to the respective battery clusters to the DC/DCs corresponding to the respective battery clusters, respectively, so as to control the DC/DCs to perform charging and discharging with the power grid. This not only enables independent charging and discharging control of each battery cluster, thereby helping improve the efficiency of charging and discharging control, but also helps improve the operational stability of each battery cluster.

In another possible implementation, for each battery cluster, a sub charge and discharge power corresponding to the battery cluster is sent to a battery management system (BMS) corresponding to the battery cluster, so as to control the BMS to perform charging and discharging with the power grid.

In the implementation, for each battery cluster, the charge and discharge power allocation device may send a sub charge and discharge power corresponding to the battery cluster to a BMS corresponding to the battery cluster, so as to control the BMS to perform charging and discharging with the power grid according to the sub charge and discharge power.

It can be seen that the charge and discharge power allocation device sends the sub charge and discharge powers corresponding to the respective battery clusters to the BMSs corresponding to the respective battery clusters, respectively, so as to control the BMSs to perform charging and discharging with the power grid. This enables independent charging and discharging control of each battery cluster, thereby helping improve the efficiency of charging and discharging control.

Certainly, the charge and discharge power allocation device may also control, based on the sub charge and discharge powers allocated to the respective battery clusters, the battery clusters to perform charging and discharging through other methods.

In summary, in the embodiments of the present application, a total charge and discharge power allocated to battery clusters in the energy storage device is obtained, and the total charge and discharge power is allocated, with optimizing charge and discharge efficiencies of the respective battery clusters of the energy storage device and balancing cycle counts among the battery clusters as allocation objectives, to obtain sub charge and discharge powers allocated to the respective battery clusters; further, the battery clusters are controlled, based on the sub charge and discharge powers allocated to the respective battery clusters, to perform charging and discharging. It can be seen that, compared with the method in the related art in which SOC balancing management for the battery clusters is achieved based on the SOC of each battery cluster, in the embodiments of the present application, the total charge and discharge power is allocated with optimizing the charge and discharge efficiencies of the respective battery clusters of the energy storage device and balancing the cycle counts among the battery clusters as allocation objectives, to obtain the sub charge and discharge powers allocated to the respective battery clusters. Thus, when the respective battery clusters perform charging and discharging according to the allocated sub charge and discharge powers, the charge and discharge efficiencies of the respective battery clusters can be optimized, and the cycle counts among the battery clusters can be balanced, thereby helping prolong the service life of the energy storage system while enabling the energy storage system to operate with optimal overall efficiency.

In some embodiments, FIG. 4 is a schematic flowchart of a charge and discharge power allocation method for an energy storage device according to some other embodiments of the present application. Based on the above embodiments, the embodiments of the present application provide an exemplary description of the related content of "the total charge and discharge power is allocated with optimizing charge and discharge efficiencies of the respective battery clusters and balancing cycle counts among the battery clusters as allocation objectives, to obtain sub charge and discharge powers allocated to the respective battery clusters" in step S302. As shown in FIG. 4, step S302 may include the following steps.

In step S3021, the battery clusters are grouped into at least one battery cluster group based on SOCs of the respective battery clusters, where different battery cluster groups have different charge and discharge priorities.

In this step, the charge and discharge power allocation device may group the battery clusters of the energy storage device into the at least one battery cluster group by comparing the SOCs of the respective battery clusters with a plurality of preset charge and discharge thresholds or a plurality of preset charge and discharge ranges, where different battery cluster groups have different charge and discharge priorities.

In a possible implementation, the battery clusters are grouped into the at least one battery cluster group based on the SOCs of the respective battery clusters and a plurality of preset charge and discharge thresholds.

For example, the plurality of preset charge and discharge thresholds in the embodiments of the present application may include, but are not limited to, at least one of the following thresholds: a discharge-not-allowed threshold SOC_not_allow_disch, a preferential discharge threshold SOC_pre_disch, a preferential charge threshold SOC_pre_chrg, and a charge-not-allowed threshold SOC_not_allow_chrg that increase sequentially. For example, the discharge-not-allowed threshold SOC_not_allow_disch may be 5%, the preferential discharge threshold SOC_pre_disch may be 20%, the preferential charge threshold SOC_pre_chrg may be 80%, and the charge-not-allowed threshold SOC_not_allow_chrg may be 100%.

In the implementation, the charge and discharge power allocation device may group the battery clusters into the at least one battery cluster group by comparing the SOCs of the respective battery clusters with the plurality of preset charge and discharge thresholds.

For ease of understanding, the following embodiments of the present application provide an exemplary description of the related content of grouping the battery clusters into the at least one battery cluster group by using an example in which the plurality of preset charge and discharge thresholds include a discharge-not-allowed threshold SOC_not_allow_disch, a preferential discharge threshold SOC_pre_disch, a preferential charge threshold SOC_pre_chrg, and a charge-not-allowed threshold SOC_not_allow_chrg.

For example, the charge and discharge power allocation device may group battery clusters in the energy storage device each having an SOC less than or equal to the discharge-not-allowed threshold SOC_not_allow_disch into a battery cluster group prioritized for charging and prohibited from discharging, group battery clusters in the energy storage device each having an SOC greater than the discharge-not-allowed threshold SOC_not_allow_disch and less than or equal to the preferential discharge threshold SOC_pre_disch into a battery cluster group prioritized for charging and secondarily prioritized for discharging, group battery clusters in the energy storage device each having an SOC greater than the preferential discharge threshold SOC_pre_disch and less than or equal to the preferential charge threshold SOC_pre_chrg into a battery cluster group prioritized for charging and discharging, group battery clusters in the energy storage device each having an SOC greater than the preferential charge threshold SOC_pre_chrg and less than or equal to the charge-not-allowed threshold SOC_not_allow_chrg into a battery cluster group prioritized for discharging and secondarily prioritized for charging, and group battery clusters in the energy storage device each having an SOC greater than the charge-not-allowed threshold SOC_not_allow_chrg into a battery cluster group prioritized for discharging and prohibited from charging.

It can be seen that, in the implementation, through the method of grouping battery clusters into at least one battery cluster group based on the SOCs of the respective battery clusters and a plurality of preset charge and discharge thresholds, the battery clusters whose SOCs satisfy different charge and discharge threshold ranges may be grouped into the same battery cluster group, such that different battery cluster groups have different charge and discharge priorities, thereby facilitating subsequent power allocation according to the battery cluster groups. This helps improve the accuracy of power allocation, thereby further improving the overall efficiency and the service life of the energy storage system.

Further, considering the differences between charging and discharging conditions, a plurality of target charge and discharge thresholds are determined from the plurality of preset charge and discharge thresholds based on the total charge and discharge power, and the battery clusters are grouped into the at least one battery cluster group based on the SOCs of the respective battery clusters and the plurality of target charge and discharge thresholds.

For example, the plurality of target charge and discharge thresholds in the embodiments of the present application may include, but are not limited to: a discharge-not-allowed threshold SOC_not_allow_disch and a preferential discharge threshold SOC_pre_disch; or a preferential charge threshold SOC_pre_chrg and a charge-not-allowed threshold SOC_not_allow_chrg.

In the embodiments of the present application, the charge and discharge power allocation device may determine a plurality of target charge and discharge thresholds from the plurality of preset charge and discharge thresholds based on the sign of the total charge and discharge power. For example, if the total charge and discharge power is a positive number, the charge and discharge power allocation device may determine a plurality of target charge and discharge thresholds related to discharging from a plurality of preset charge and discharge thresholds, such as a discharge-not-allowed threshold SOC_not_allow_disch and a preferential discharge threshold SOC_pre_disch. For another example, if the total charge and discharge power is a negative number, the charge and discharge power allocation device may determine a plurality of target charge and discharge thresholds related to charging from a plurality of preset charge and discharge thresholds, such as a preferential charge threshold SOC_pre_chrg and a charge-not-allowed threshold SOC_not_allow_chrg.

Further, the charge and discharge power allocation device may group the battery clusters into the at least one battery cluster group by comparing the SOCs of the respective battery clusters with the plurality of target charge and discharge thresholds.

For ease of understanding, the following embodiments of the present application provide an exemplary description of the related content of grouping the battery clusters into the at least one battery cluster group by using a discharging scenario and a plurality of target charge and discharge thresholds including a discharge-not-allowed threshold SOC_not_allow_disch and a preferential discharge threshold SOC_pre_disch as an example.

For example, the charge and discharge power allocation device may group battery clusters in the energy storage device each having an SOC less than or equal to the discharge-not-allowed threshold SOC_not_allow_disch into a battery cluster group prohibited from discharging, group battery clusters in the energy storage device each having an SOC greater than the discharge-not-allowed threshold SOC_not_allow_disch and less than or equal to the preferential discharge threshold SOC_pre_disch into a battery cluster group secondarily prioritized for discharging, and group battery clusters in the energy storage device each having an SOC greater than the preferential discharge threshold SOC_pre_disch into a battery cluster group prioritized for discharging.

It can be seen that, in the implementation, through the method of grouping the battery clusters into the at least one battery cluster group based on the plurality of target charge and discharge thresholds determined from the plurality of preset charge and discharge thresholds based on the total charge and discharge power, and the SOCs of the respective battery clusters, the battery clusters can be grouped into required battery cluster groups, thereby facilitating subsequent power allocation according to the battery cluster groups and helping improve the efficiency of power allocation.

In another possible implementation, the battery clusters are grouped into the at least one battery cluster group based on the SOCs of the respective battery clusters and a plurality of preset charge and discharge ranges.

For example, the plurality of preset charge and discharge ranges in the embodiments of the present application may include, but are not limited to, at least one of the following ranges: a range in which charging is prioritized and discharging is prohibited, a range in which charging is prioritized and discharging is secondarily prioritized, a range in which charging and discharging are prioritized, a range in which discharging is prioritized and charging is secondarily prioritized, and a range in which discharging is prioritized and charging is prohibited. It should be understood that each preset charge and discharge range includes corresponding upper and lower SOC thresholds, respectively.

In the implementation, the charge and discharge power allocation device may group the battery clusters whose SOCs fall within the same preset charge and discharge range into one battery cluster group by comparing the SOCs of the respective battery clusters with a plurality of preset charge and discharge ranges.

Certainly, the charge and discharge power allocation device may alternatively group the battery clusters into the at least one battery cluster group through other methods.

In step S3022, based on the total charge and discharge power and charge and discharge power limits corresponding to the respective battery cluster groups, at least one target battery cluster group for charging and discharging is determined from the at least one battery cluster group, and target charge and discharge powers corresponding to the respective target battery cluster groups are determined.

For example, in the embodiments of the present application, the charge and discharge power limit corresponding to any battery cluster group may be used to indicate the sum of sub charge and discharge power limits corresponding to the respective battery clusters in the battery cluster group. It should be understood that, in a discharging scenario, the charge and discharge power limit corresponding to any battery cluster group may be used to indicate the sum of sub discharge power limits corresponding to the respective battery clusters in the battery cluster group; and in a charging scenario, the charge and discharge power limit corresponding to any battery cluster group may be used to indicate the sum of sub charge power limits corresponding to the respective battery clusters in the battery cluster group.

It should be noted that, in the discharging scenario, the sub discharge power limits or charge and discharge power limits involved in the embodiments of the present application may be positive numbers; and in the charging scenario, the sub charge power limits or charge and discharge power limits involved in the embodiments of the present application may be negative numbers.

In this step, the charge and discharge power allocation device may determine, based on the sign of the total charge and discharge power and the charge and discharge power limits corresponding to the respective battery cluster groups, at least one target battery cluster group for charging and discharging from the at least one battery cluster group, and target charge and discharge powers corresponding to the respective target battery cluster groups.

For example, if the total charge and discharge power is a positive number, the charge and discharge power allocation device may determine, based on the total charge and discharge power and the charge and discharge power limits corresponding to the respective battery cluster groups (which are each used to indicate the sum of sub discharge power limits corresponding to the respective battery clusters in the corresponding battery cluster group), at least one target battery cluster group that needs to perform discharging from the at least one battery cluster group, and target discharge powers corresponding to the respective target battery cluster groups.

For another example, if the total charge and discharge power is a negative number, the charge and discharge power allocation device may determine, based on the total charge and discharge power and the charge and discharge power limits corresponding to the respective battery cluster groups (which are each used to indicate the sum of sub charge power limits corresponding to the respective battery clusters in the corresponding battery cluster group), at least one target battery cluster group that needs to perform charging from the at least one battery cluster group, and target charge powers corresponding to the respective target battery cluster groups.

In a possible implementation, the charge and discharge power allocation device may determine, based on the sign of the total charge and discharge power and the charge and discharge power limits corresponding to the respective battery cluster groups, at least one target battery cluster group for charging and discharging from the at least one battery cluster group in descending order of charge and discharge priority, and target charge and discharge powers corresponding to the respective target battery cluster groups.

In the implementation, the charge and discharge power allocation device may determine, based on the total charge and discharge power, a first candidate battery cluster having a highest charge and discharge priority from the at least one battery cluster group.

For example, if the total charge and discharge power is a positive number, the charge and discharge power allocation device may determine a first candidate battery cluster having a highest discharge priority from the at least one battery cluster group. For another example, if the total charge and discharge power is a negative number, the charge and discharge power allocation device may determine a first candidate battery cluster having a highest charge priority from the at least one battery cluster group.

Further, if the absolute value of a charge and discharge power limit corresponding to the first candidate battery cluster is greater than the absolute value of the total charge and discharge power (that is, the total discharge power can be achieved by charging and discharging only the first candidate battery cluster), the first candidate battery cluster is used as the target battery cluster group, and the total charge and discharge power is used as the target charge and discharge power corresponding to the target battery cluster group.

For example, if the total charge and discharge power is a positive number, and the charge and discharge power limit corresponding to the first candidate battery cluster (which is used to indicate the sum of sub discharge power limits corresponding to the respective battery clusters in the battery cluster group) is greater than the total charge and discharge power, the charge and discharge power allocation device may use the first candidate battery cluster as a target battery cluster group that needs to perform discharging, and use the total charge and discharge power as the target discharge power corresponding to the target battery cluster group.

For another example, if the total charge and discharge power is a negative number, and the absolute value of the charge and discharge power limit corresponding to the first candidate battery cluster (which is used to indicate the sum of the sub charge power limits corresponding to the respective battery clusters in the battery cluster group) is greater than the absolute value of the total charge and discharge power, the charge and discharge power allocation device may use the first candidate battery cluster as a target battery cluster group that needs to perform charging, and use the total charge and discharge power as the target charge power corresponding to the target battery cluster group.

Further, if the absolute value of the charge and discharge power limit corresponding to the first candidate battery cluster is not greater than the absolute value of the total charge and discharge power (that is, the total discharge power cannot be achieved by charging and discharging only the first candidate battery cluster), the first candidate battery cluster is used as a first target battery cluster group, and the charge and discharge power limit corresponding to the first candidate battery cluster is used as a target charge and discharge power corresponding to the first target battery cluster group.

Further, a second candidate battery cluster having a second-highest charge and discharge priority is determined from the at least one battery cluster group; if the absolute value of a charge and discharge power limit corresponding to the second candidate battery cluster is greater than a first preset absolute value, the second candidate battery cluster is used as a second target battery cluster group, and the difference between the total charge and discharge power and the charge and discharge power limit corresponding to the first candidate battery cluster is used as a target charge and discharge power corresponding to the second target battery cluster group, where the first preset absolute value is the absolute value of the difference between the total charge and discharge power and the charge and discharge power limit corresponding to the first candidate battery cluster (that is, the total discharge power can be achieved by charging and discharging the first candidate battery cluster and the second candidate battery cluster).

For example, if the total charge and discharge power is a positive number, the charge and discharge power allocation device may determine a second candidate battery cluster having a second-highest discharge priority from the at least one battery cluster group. For another example, if the total charge and discharge power is a negative number, the charge and discharge power allocation device may determine a second candidate battery cluster having a second-highest charge priority from the at least one battery cluster group.

It should be noted that if the absolute value of the charge and discharge power limit corresponding to the second candidate battery cluster is still not greater than the first preset absolute value (that is, the total discharge power cannot be achieved by charging and discharging the first candidate battery cluster and the second candidate battery cluster), a third candidate battery cluster having a second-highest charge and discharge priority further needs to be determined from the at least one battery cluster group. If the absolute value of a charge and discharge power limit corresponding to the third candidate battery cluster is greater than a second preset absolute value (the second preset absolute value is the absolute value of the difference between the total charge and discharge power and the charge and discharge power limits corresponding to the first candidate battery cluster and the first candidate battery cluster, respectively; that is, the total discharge power can be achieved by charging and discharging the first candidate battery cluster, the second candidate battery cluster, and the third candidate battery cluster), the third candidate battery cluster is used as a third target battery cluster group, and the difference between the total charge and discharge power and the charge and discharge power limits corresponding to the first candidate battery cluster and the first candidate battery cluster, respectively, is used as a target charge and discharge power corresponding to the third target battery cluster group. The charge and discharge priority of the first candidate battery cluster is higher than the charge and discharge priority of the second candidate battery cluster, and the charge and discharge priority of the second candidate battery cluster is higher than the charge and discharge priority of the third candidate battery cluster.

It can be seen that, in the implementation, the charge and discharge power allocation device determines, based on the total charge and discharge power and the charge and discharge power limits corresponding to the respective battery cluster groups, target battery cluster groups for charging and discharging from the at least one battery cluster group in descending order of charge and discharge priority, and target charge and discharge powers corresponding to the respective target battery cluster groups, such that the target battery clusters for charging and discharging can perform charging and discharging preferentially, thereby helping further improve the balance of the cycle counts among the battery clusters of the energy storage device.

In another possible implementation, the charge and discharge power allocation device may determine, based on the total charge and discharge power and the charge and discharge power limits corresponding to the respective battery cluster groups, at least one target battery cluster group for charging and discharging from the at least one battery cluster group in descending order or ascending order of SOC of the battery cluster group, and target charge and discharge powers corresponding to the respective target battery cluster groups.

Certainly, the charge and discharge power allocation device may further determine, based on the total charge and discharge power and the charge and discharge power limits corresponding to the respective battery cluster groups, at least one target battery cluster group for charging and discharging from the at least one battery cluster group, and target charge and discharge powers corresponding to the respective target battery cluster groups through other methods.

In step S3023, for each target battery cluster group, a target charge and discharge power corresponding to the target battery cluster group is allocated with optimizing charge and discharge efficiencies of the respective battery clusters in the target battery cluster group and balancing cycle counts among the battery clusters as allocation objectives, to obtain sub charge and discharge powers allocated to the respective battery clusters in the target battery cluster group.

In this step, for each target battery cluster group, the charge and discharge power allocation device may establish a charge and discharge power allocation model with optimizing the charge and discharge efficiencies of the respective battery clusters in the target battery cluster group and balancing the cycle counts among the battery clusters as allocation objectives. By solving the charge and discharge power allocation model, the target charge and discharge power corresponding to the target battery cluster group can be allocated to obtain the sub charge and discharge powers allocated to the respective battery clusters in the target battery cluster group, such that when the respective battery clusters in the target battery cluster group perform charging and discharging according to the allocated sub charge and discharge powers, the charge and discharge efficiencies of the respective battery clusters of the energy storage device can be optimized, and the cycle counts among the battery clusters can be balanced.

In a possible implementation, the charge and discharge power allocation model in the embodiments of the present application may be a machine learning model. The input of the charge and discharge power allocation model may include, but is not limited to, total charge and discharge power, and the output of the charge and discharge power allocation model may include, but is not limited to, sub charge and discharge powers allocated to respective battery clusters.

In another possible implementation, the charge and discharge power allocation model in the embodiments of the present application may be a mathematical model of an optimization problem. The charge and discharge power allocation model may include, but is not limited to, an objective function and a preset constraint condition (or referred to as a preset restriction condition).

For example, the charge and discharge power allocation device may solve the charge and discharge power allocation model by using an optimization algorithm, so as to allocate the target charge and discharge power corresponding to the target battery cluster group, thereby obtaining the sub charge and discharge powers allocated to the respective battery clusters in the target battery cluster group. The optimization algorithm may include, but is not limited to, any one of the following: a genetic algorithm, an annealing algorithm, and a particle swarm optimization algorithm.

In summary, in the embodiments of the present application, the at least one target battery cluster group for charging and discharging and the target charge and discharge powers corresponding to the respective target battery cluster groups are determined based on the SOCs of the respective battery clusters, the total charge and discharge power, and the charge and discharge power limits corresponding to the respective battery cluster groups. Moreover, the target charge and discharge powers corresponding to the respective target battery cluster groups are allocated with optimizing the charge and discharge efficiencies of the respective battery clusters in the target battery cluster group and balancing the cycle counts among the battery clusters as allocation objectives, to obtain the sub charge and discharge powers allocated to the respective battery clusters in each target battery cluster group. In this way, when the respective battery clusters in the target battery cluster group for charging and discharging perform charging and discharging according to the allocated sub charge and discharge powers, the charge and discharge efficiencies of the respective battery clusters of the energy storage device can be optimized, and the cycle counts among the battery clusters can be balanced, and the efficiency of power allocation can also be improved.

In some embodiments, FIG. 5 is a schematic flowchart of a charge and discharge power allocation method for an energy storage device according to some other embodiments of the present application. Based on the above embodiments, the embodiments of the present application provide an exemplary description of the related content of "a target charge and discharge power corresponding to the target battery cluster group is allocated with optimizing charge and discharge efficiencies of the respective battery clusters in the target battery cluster group and balancing cycle counts among the battery clusters as allocation objectives, to obtain sub charge and discharge powers allocated to the respective battery clusters in the target battery cluster group" in step S3023. As shown in FIG. 5, step S3023 may include the following steps.

In step S501, an objective function is obtained, where the objective function includes an imbalance degree term of historical charge and discharge capacities of the respective battery clusters in the target battery cluster group and a charge and discharge power loss term of the respective battery clusters in the target battery cluster group.

For example, in the embodiments of the present application, the imbalance degree term of the historical charge and discharge capacities of the respective battery clusters in the target battery cluster group may be used to indicate a total imbalance cost corresponding to imbalance degrees of the historical charge and discharge capacities of the respective battery clusters in the target battery cluster group. The imbalance degrees of the historical charge and discharge capacities of the respective battery clusters refer to parameters that can be used to quantify capacity differences among the battery clusters caused by different service lives of historical battery clusters.

A historical charge and discharge capacity of any battery cluster is positively correlated with a cycle count of the battery cluster; that is, the larger the historical charge and discharge capacity of the battery cluster, the greater the cycle count of the battery cluster.

For example, in the embodiments of the present application, the charge and discharge power loss term of the respective battery clusters in the target battery cluster group may be used to indicate a total loss cost corresponding to charge and discharge power losses of the respective battery clusters in the target battery cluster group. The charge and discharge power loss of each battery cluster refers to the energy loss occurring during energy conversion of each battery cluster during charging and discharging.

In this step, the charge and discharge power allocation device may obtain an imbalance degree term of historical charge and discharge capacities of the respective battery clusters in the target battery cluster group and a charge and discharge power loss term of the respective battery clusters in the target battery cluster group. Further, the charge and discharge power allocation device may obtain an objective function based on the imbalance degree term and the charge and discharge power loss term; that is, the objective function includes both the imbalance degree term and the charge and discharge power loss term. That is, the objective function may be used to indicate the balance of the cycle counts among the battery clusters and the charge and discharge efficiencies of the respective battery clusters, such that solving the objective function can achieve the purpose of balancing the cycle counts among the battery clusters and optimizing the charge and discharge efficiencies of the respective battery clusters.

The following embodiments of the present application provide an exemplary description of the method for obtaining the imbalance degree term of the historical charge and discharge capacities.

Optionally, imbalance degrees of the historical charge and discharge capacities of the respective battery clusters in the target battery cluster group are obtained based on total historical charge and discharge capacities and corresponding sub charge and discharge powers of the respective battery clusters in the target battery cluster group; and the imbalance degree term is obtained based on an energy storage system cost per unit of charge and discharge capacity and the imbalance degrees of the historical charge and discharge capacities of the respective battery clusters in the target battery cluster group.

For example, the total historical charge and discharge capacity of the battery cluster in the embodiments of the present application may include, but is not limited to, a total historical charge capacity of the battery cluster and a total historical discharge capacity of the battery cluster.

In the embodiments of the present application, for each battery cluster in the target battery cluster group, the charge and discharge power allocation device may determine an initial total charge and discharge capacity of the battery cluster based on a total historical charge and discharge capacity of the battery cluster through the following formula (1).${Cap}_{{all}_{{init}_{i}}} = {Cap}_{dischi} + {Cap}_{chrgi}$ Formula (1) ${Cap}_{{all}_{{init}_{j}}}$ represents an initial total charge and discharge capacity of a battery cluster i in the target battery cluster group; Cap_{dischi} represents a total historical discharge capacity of the battery cluster i in the target battery cluster group; Cap_{chrgi} represents a total historical charge capacity of the battery cluster i in the target battery cluster group.

Certainly, the charge and discharge power allocation device may alternatively determine the initial total charge and discharge capacity of the battery cluster based on the total historical charge and discharge capacity of the battery cluster through other modified or equivalent formulas of the foregoing formula (1).

Further, the charge and discharge power allocation device obtains the imbalance degrees of the historical charge and discharge capacities of the respective battery clusters in the target battery cluster group based on initial total charge and discharge capacities and corresponding sub charge and discharge powers of the respective battery clusters in the target battery cluster group.

For example, for each battery cluster in the target battery cluster group, the charge and discharge power allocation device may obtain the imbalance degree of the historical charge and discharge capacity of the battery cluster based on the initial total charge and discharge capacity and the corresponding sub charge and discharge power of the battery cluster through the following formula (2).$\begin{matrix}{Cap}_{{range}_{i}} = \left|\frac{1}{N}{\sum }_{j = 1}^{N} {Cap}_{j} - {Cap}_{i}\right| \\ = \left|\frac{1}{N}{\sum }_{j = 1}^{N} \left({Cap}_{{all}_{{init}_{j}}}+\frac{{P}_{j}}{η \left({P}_{j}\right)}T\right) - \left({Cap}_{{all}_{{init}_{i}}}+\frac{{P}_{i}}{η \left({P}_{i}\right)}T\right)\right|\end{matrix}$ Formula (2)

Cap_{rangeᵢ} represents the imbalance degree of the historical charge and discharge capacity of a battery cluster i in the target battery cluster group; N represents the total number of battery clusters in the target battery cluster group; Capⱼ represents a variation of the total historical charge and discharge capacity of a battery cluster j in the target battery cluster group; Capᵢ represents a variation of the total historical charge and discharge capacity of the battery cluster i in the target battery cluster group; ${Cap}_{{al}_{{init}_{j}}}$ represents an initial total charge and discharge capacity of the battery cluster j in the target battery cluster group; Pⱼ represents a sub charge and discharge power corresponding to the battery cluster j in the target battery cluster group; Pᵢ represents a sub charge and discharge power corresponding to the battery cluster i in the target battery cluster group; *η*( ) represents an efficiency function corresponding to the operating power; T represents a power allocation calculation period.

It should be noted that the sub charge and discharge powers corresponding to the respective battery clusters in the foregoing formula (2) are unknown variables, and optimal sub charge and discharge powers need to be obtained by solving the objective function. In the case where each battery cluster is connected to the charge and discharge power allocation device via a corresponding DC/DC, *η*( ) in the foregoing formula (2) may be an efficiency function corresponding to different operating powers of the DC/DC, and the efficiency function may be obtained by fitting efficiency test data of the DC/DC during factory testing.

Certainly, the charge and discharge power allocation device may alternatively obtain the imbalance degree of the historical charge and discharge capacity of the battery cluster based on the initial total charge and discharge capacity and the corresponding sub charge and discharge power of the battery cluster through other modified or equivalent formulas of the foregoing formula (2).

Further, the charge and discharge power allocation device may obtain, based on the energy storage system cost per unit of charge and discharge capacity and the imbalance degrees of the historical charge and discharge capacities of the respective battery clusters in the target battery cluster group, the imbalance degree term of the historical charge and discharge capacities of the respective battery clusters in the target battery cluster group through the following formula (3).${Cap}_{dise} = Cess {\sum }_{i}^{N} {Cap}_{{range}_{i}}$ Formula (3)

Cap_{dise} represents an imbalance degree term of historical charge and discharge capacities of the respective battery clusters in the target battery cluster group; Cess represents an energy storage system cost per unit of charge and discharge capacity.

Certainly, the charge and discharge power allocation device may alternatively obtain, based on the energy storage system cost per unit of charge and discharge capacity and the imbalance degrees of the historical charge and discharge capacities of the respective battery clusters in the target battery cluster group, the imbalance degree term of the historical charge and discharge capacities of the respective battery clusters in the target battery cluster group through other modified or equivalent formulas of the foregoing formula (3).

It should be noted that, in the embodiments of the present application, the energy storage system cost per unit of charge and discharge capacity may be determined by the charge and discharge power allocation device based on a preset energy storage system cost, a preset capacity of a single battery cluster, and a preset cycle count of a single battery cluster.

For example, the charge and discharge power allocation device may determine the energy storage system cost per unit of charge and discharge capacity based on the preset energy storage system cost, the preset capacity of a single battery cluster, and the preset cycle count of a single battery cluster through the following formula (4).$Cess = \frac{{Call}_{ess}}{{N}_{all} * {Cap}_{pack} * {Num}_{cycle}}$ Formula (4)

Callₑₛₛ represents the preset energy storage system cost; Cap_{pack} represents the preset capacity of a single battery cluster; Num_{cycle} represents the preset cycle count of a single battery cluster; Nₐₗₗ represents the total number of battery clusters in the energy storage device.

Certainly, the charge and discharge power allocation device may alternatively determine the energy storage system cost per unit of charge and discharge capacity based on the preset energy storage system cost, the preset capacity of a single battery cluster, and the preset cycle count of a single battery cluster through other modified or equivalent formulas of the foregoing formula (4).

In the embodiments of the present application, the imbalance degrees of the historical charge and discharge capacities of the respective battery clusters in the target battery cluster group are obtained based on the total historical charge and discharge capacities and the corresponding sub charge and discharge powers of the respective battery clusters in the target battery cluster group. Further, the imbalance degree term is obtained based on the energy storage system cost per unit of charge and discharge capacity and the imbalance degrees of the historical charge and discharge capacities of the respective battery clusters in the target battery cluster group. It can be seen that the imbalance degree term in the embodiments of the present application is related to the imbalance degrees of the total historical charge and discharge capacities of the respective battery clusters. That is, the imbalance degree term may be used to indicate the balance of the cycle counts among the battery clusters, such that solving the objective function including the imbalance degree term can achieve the purpose of balancing the cycle counts among the battery clusters.

The following embodiments of the present application provide an exemplary description of the method for obtaining the charge and discharge power loss term.

Optionally, the charge and discharge power loss term is obtained based on an electricity price per unit of power and sub charge and discharge powers corresponding to the respective battery clusters in the target battery cluster group.

For example, the charge and discharge power allocation device may obtain the charge and discharge power loss term based on the electricity price per unit of power and the sub charge and discharge powers corresponding to the respective battery clusters in the target battery cluster group through the following formula (5).${P}_{loss} = Cele {\sum }_{i}^{N} {P}_{i} \left(1-η\left({P}_{i}\right)\right)$ Formula (5)

Pₗₒₛₛ represents the charge and discharge power loss term of the respective battery clusters in the target battery cluster group; Cele represents the electricity price per unit of power.

Certainly, the charge and discharge power allocation device may alternatively obtain the charge and discharge power loss term based on the electricity price per unit of power and the sub charge and discharge powers corresponding to the respective battery clusters in the target battery cluster group through other modified or equivalent formulas of the foregoing formula (5).

It can be seen that, in the embodiments of the present application, the charge and discharge power loss term is obtained based on the electricity price per unit of power and the sub charge and discharge powers corresponding to the respective battery clusters in the target battery cluster group, such that solving the objective function including the charge and discharge power loss term can achieve the purpose of optimizing the charge and discharge efficiencies of the respective battery clusters.

For example, the charge and discharge power allocation device may obtain the objective function based on the imbalance degree term and the charge and discharge power loss term through the following formula (6).${Obj}_{fun} = {Cap}_{dise} + {P}_{loss} = Cess {\sum }_{i}^{N} {Cap}_{{range}_{i}} + Cele {\sum }_{i}^{N} {P}_{i} \left(1-η\left({P}_{i}\right)\right)$ Formula (6)

Obj_{fun} represents the objective function.

Certainly, the charge and discharge power allocation device may also obtain the objective function based on the imbalance degree term and the charge and discharge power loss term through other modified or equivalent formulas of the foregoing formula (6).

It can be seen that the objective function in the embodiments of the present application includes both the imbalance degree term and the charge and discharge power loss term. By solving the objective function, the purpose of balancing the cycle counts among the battery clusters and optimizing the charge and discharge efficiencies of the respective battery clusters can be achieved.

In step S502, the objective function is solved based on a preset constraint condition and with minimizing the value of the objective function as an objective, to obtain the sub charge and discharge powers allocated to the respective battery clusters in the target battery cluster group.

In this step, considering the reasonableness of the sub charge and discharge powers allocated to the respective battery clusters, the charge and discharge power allocation device may solve the objective function based on the preset constraint condition and with minimizing the value of the objective function as an objective, to obtain the sub charge and discharge powers allocated to the respective battery clusters in the target battery cluster group.

For example, the preset constraint condition in the embodiments of the present application may include, but is not limited to, a first power constraint condition and a second power constraint condition.

The first power constraint condition may be that the sum of sub charge and discharge powers corresponding to the respective battery clusters in the target battery cluster group is equal to a target charge and discharge power corresponding to the target battery cluster group.

For example, for the first power constraint condition in the embodiments of the present application, reference may be made to the following formula (7).${P}_{obj} = {\sum }_{i}^{N} {P}_{i}$ Formula (7)

P_{obj} represents the target charge and discharge power corresponding to the target battery cluster group.

Certainly, for the first power constraint condition in the embodiments of the present application, reference may further be made to other modified or equivalent formulas of the foregoing formula (7).

The second power constraint condition may be that the sub charge and discharge powers corresponding to the respective battery clusters in the target battery cluster group are within a preset sub charge and discharge power limit range.

For example, for the second power constraint condition in the embodiments of the present application, reference may be made to the following formula (8).${P}_{{chrglim}_{i}} \leq {P}_{i} \leq {P}_{{dischlim}_{i}}$ Formula (8)

P_{chrglimᵢ} represents a sub charge power limit of a battery cluster i in the target battery cluster group; P_{dischlimᵢ} represents a sub discharge power limit of the battery cluster i in the target battery cluster group. It should be understood that the lower limit of the preset sub charge and discharge power limit range may be a sub charge power limit, and the upper limit of the preset sub charge and discharge power limit range may be a sub discharge power limit.

Certainly, for the second power constraint condition in the embodiments of the present application, reference may further be made to other modified or equivalent formulas of the foregoing formula (8).

It can be seen that, in the embodiments of the present application, the objective function is solved based on the preset constraint condition and with minimizing the value of the objective function as an objective, to obtain the sub charge and discharge powers allocated to the respective battery clusters in the target battery cluster group, such that the charge and discharge efficiencies of the respective battery clusters can be further optimized, and the cycle counts among the battery clusters can be further balanced.

In summary, in the embodiments of the present application, the objective function is obtained, where the objective function includes the imbalance degree term of the historical charge and discharge capacities of the respective battery clusters in the target battery cluster group and the charge and discharge power loss term of the respective battery clusters in the target battery cluster group; further, the objective function is solved based on the preset constraint condition and with minimizing the value of the objective function as an objective, to obtain the sub charge and discharge powers allocated to the respective battery clusters in the target battery cluster group. It can be seen that, in the embodiments of the present application, the objective function is solved based on the preset constraint condition and with minimizing the value of the objective function including the imbalance degree term and the charge and discharge power loss term, to obtain the sub charge and discharge powers allocated to the respective battery clusters in the target battery cluster group, such that the charge and discharge efficiencies of the respective battery clusters can be further optimized, and the cycle counts among the battery clusters can be further balanced, thereby helping further prolong the service life of the energy storage system while enabling the energy storage system to operate with optimal overall efficiency.

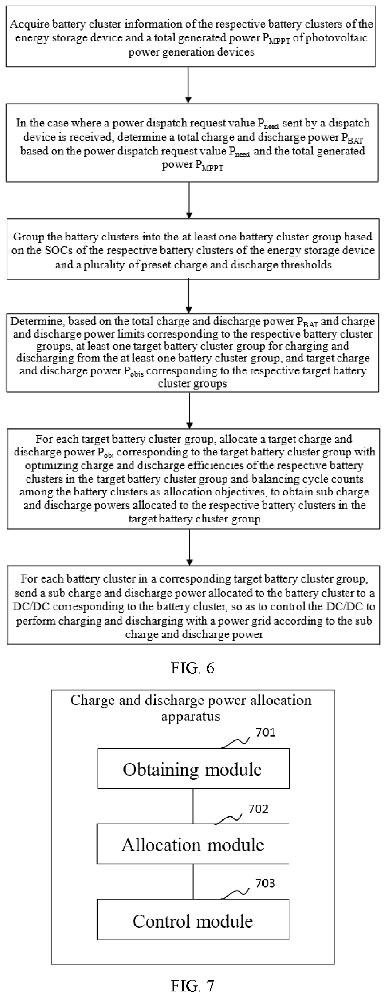

In one embodiment, FIG. 6 is a schematic flowchart of a charge and discharge power allocation method for an energy storage device according to some other embodiments of the present application. Based on the above embodiments, the following embodiments of the present application provide an exemplary description of the entire process of the charge and discharge power allocation method for an energy storage device according to the embodiments of the present application by taking the charge and discharge power allocation system shown in FIG. 2 as an example. As shown in FIG. 6, the method according to the embodiments of the present application may include the following steps.

### 1) Information acquisition process

In the embodiments of the present application, the charge and discharge power allocation device may acquire battery cluster information of the respective battery clusters from BMSs corresponding to the respective battery clusters of the energy storage device. The battery cluster information may include, but is not limited to, at least one of the following: an SOC, a total historical discharge capacity Cap_{disch}, a total historical charge capacity Cap_{chrg}, a sub charge power limit P_{chrglim}, and a sub discharge power limit P_{dischlim}.

In the embodiments of the present application, the charge and discharge power allocation device may acquire a total generated power P_{MPPT} of photovoltaic power generation devices from the MPPT.

### 2) Power allocation process

In the embodiments of the present application, in the case where the charge and discharge power allocation device has received a power dispatch request value P_{need} sent by the dispatch device, the charge and discharge power allocation device may determine a total charge and discharge power P_{BAT} based on the power dispatch request value P_{need} and the total generated power P_{MPPT}. For example, the charge and discharge power allocation device may take the difference between the power dispatch request value P_{need} and the total generated power P_{MPPT} as the total charge and discharge power P_{BAT}.

Further, the charge and discharge power allocation device may group the battery clusters into at least one battery cluster group based on the SOCs of the respective battery clusters of the energy storage device and a plurality of preset charge and discharge thresholds. Different battery cluster groups have different charge and discharge priorities.

Further, the charge and discharge power allocation device may determine, based on the total charge and discharge power P_{BAT} and the charge and discharge power limits corresponding to the respective battery cluster groups, at least one target battery cluster group for charging and discharging from the at least one battery cluster group, and target charge and discharge powers P_{obj}s corresponding to the respective target battery cluster groups.

Further, for each target battery cluster group, the charge and discharge power allocation device may allocate, with optimizing charge and discharge efficiencies of the respective battery clusters in the target battery cluster group and balancing cycle counts among the battery clusters as allocation objectives, a target charge and discharge power P_{obj} corresponding to the target battery cluster group, to obtain sub charge and discharge powers allocated to the respective battery clusters in the target battery cluster group.

For example, the charge and discharge power allocation device may obtain the objective function shown in the foregoing formula (6), and solve the objective function based on the preset constraint conditions shown in the foregoing formulas (7) and (8) and with minimizing the value of the objective function as an objective, to obtain the sub charge and discharge powers Pᵢs allocated to the respective battery clusters in the target battery cluster group.

Further, for each battery cluster in a corresponding target battery cluster group, the charge and discharge power allocation device may send a sub charge and discharge power allocated to the battery cluster to a DC/DC corresponding to the battery cluster, so as to control the DC/DC to perform charging and discharging with a power grid according to the sub charge and discharge power.

It should be noted that for the implementations of each step in the embodiments of the present application, reference may be made to the related contents in the above embodiments, and the details will not be repeated here.

It should be understood that although the steps in the flowcharts related to the embodiments described above are displayed sequentially according to the direction of the arrows, these steps are not necessarily executed in the order indicated by the arrows. Unless explicitly stated herein, there is no strict sequential limitation to the execution of these steps, and they can be executed in other orders. Moreover, at least some of the steps in the flowcharts related to the embodiments described above may include multiple steps or stages, which are not necessarily executed at the same time but may be executed at different times. The execution order of these steps or stages is not necessarily sequential; they may be executed in turn or alternately with other steps or at least some of the steps or stages in other steps.

Based on the same inventive concept, the embodiments of the present application further provide a charge and discharge power allocation apparatus configured to implement the charge and discharge power allocation method for an energy storage device described above. The implementation solution provided by the apparatus for problem-solving is similar to the implementation solution described in the above method. Therefore, for the specific limitations in one or more embodiments of the charge and discharge power allocation apparatus provided below, reference may be made to the limitations described above on the charge and discharge power allocation method, which will not be repeated here.

In some embodiments, FIG. 7 is a schematic structural diagram of a charge and discharge power allocation apparatus according to some embodiments of the present application. The charge and discharge power allocation apparatus according to the embodiments of the present application can be applied to a charge and discharge power allocation device. As shown in FIG. 7, the charge and discharge power allocation apparatus according to the embodiments of the present application may include an obtaining module 701, an allocation module 702, and a control module 703.

The obtaining module 701 is configured to obtain a total charge and discharge power allocated to battery clusters in the energy storage device.

The allocation module 702 is configured to allocate, with optimizing charge and discharge efficiencies of the respective battery clusters of the energy storage device and balancing cycle counts among the battery clusters as allocation objectives, the total charge and discharge power, to obtain sub charge and discharge powers allocated to the respective battery clusters.

The control module 703 is configured to control, based on the sub charge and discharge powers allocated to the respective battery clusters, the battery clusters to perform charging and discharging.

In some embodiments, the allocation module 702 includes:
a grouping unit, configured to group, based on SOCs of the respective battery clusters, the battery clusters into at least one battery cluster group, where different battery cluster groups have different charge and discharge priorities;
a determination unit, configured to determine, based on the total charge and discharge power and charge and discharge power limits corresponding to the respective battery cluster groups, at least one target battery cluster group for charging and discharging from the at least one battery cluster group, and target charge and discharge powers corresponding to the respective target battery cluster groups; and
an allocation unit, configured to allocate, for each target battery cluster group, a target charge and discharge power corresponding to the target battery cluster group with optimizing charge and discharge efficiencies of the respective battery clusters in the target battery cluster group and balancing cycle counts among the battery clusters as allocation objectives, to obtain sub charge and discharge powers allocated to the respective battery clusters in the target battery cluster group.

In some embodiments, the allocation unit includes:
an obtaining subunit, configured to obtain an objective function, where the objective function includes an imbalance degree term of historical charge and discharge capacities of the respective battery clusters in the target battery cluster group and a charge and discharge power loss term of the respective battery clusters in the target battery cluster group; and
a solving subunit, configured to solve, based on a preset constraint condition and with minimizing the value of the objective function as an objective, the objective function, to obtain the sub charge and discharge powers allocated to the respective battery clusters in the target battery cluster group.

In some embodiments, the obtaining subunit is specifically configured to:
obtain, based on total historical charge and discharge capacities and corresponding sub charge and discharge powers of the respective battery clusters in the target battery cluster group, imbalance degrees of the historical charge and discharge capacities of the respective battery clusters in the target battery cluster group; and
obtain, based on an energy storage system cost per unit of charge and discharge capacity and the imbalance degrees of the historical charge and discharge capacities of the respective battery clusters in the target battery cluster group, the imbalance degree term.

In some embodiments, the obtaining subunit is specifically configured to:
obtain, based on an electricity price per unit of power and sub charge and discharge powers corresponding to the respective battery clusters in the target battery cluster group, the charge and discharge power loss term.

In some embodiments, the preset constraint condition includes: a first power constraint condition and a second power constraint condition. The first power constraint condition is that the sum of sub charge and discharge powers corresponding to the respective battery clusters in the target battery cluster group is equal to a target charge and discharge power corresponding to the target battery cluster group; and the second power constraint condition is that the sub charge and discharge powers corresponding to the respective battery clusters in the target battery cluster group are within a preset sub charge and discharge power limit range.

In some embodiments, the determination unit is specifically configured to:
determine, based on the total charge and discharge power, a first candidate battery cluster having a highest charge and discharge priority from the at least one battery cluster group; and
if the absolute value of a charge and discharge power limit corresponding to the first candidate battery cluster is greater than the absolute value of the total charge and discharge power, use the first candidate battery cluster as the target battery cluster group, and use the total charge and discharge power as a target charge and discharge power corresponding to the target battery cluster group.

In some embodiments, the determination unit is further configured to:
if the absolute value of the charge and discharge power limit corresponding to the first candidate battery cluster is not greater than the absolute value of the total charge and discharge power, use the first candidate battery cluster as a first target battery cluster group, and use the charge and discharge power limit corresponding to the first candidate battery cluster as a target charge and discharge power corresponding to the first target battery cluster group;
determine a second candidate battery cluster having a second-highest charge and discharge priority from the at least one battery cluster group; and
if the absolute value of a charge and discharge power limit corresponding to the second candidate battery cluster is greater than a preset absolute value, use the second candidate battery cluster as a second target battery cluster group, and use the difference between the total charge and discharge power and the charge and discharge power limit corresponding to the first candidate battery cluster as a target charge and discharge power corresponding to the second target battery cluster group, where the preset absolute value is the absolute value of the difference between the total charge and discharge power and the charge and discharge power limit corresponding to the first candidate battery cluster.

In some embodiments, the grouping unit is specifically configured to:
group, based on the SOCs of the respective battery clusters and a plurality of preset charge and discharge thresholds, the battery clusters into the at least one battery cluster group.

In some embodiments, the grouping unit is specifically configured to:
determine, based on the total charge and discharge power, a plurality of target charge and discharge thresholds from the plurality of preset charge and discharge thresholds; and
group, based on the SOCs of the respective battery clusters and the plurality of target charge and discharge thresholds, the battery clusters into the at least one battery cluster group.

In some embodiments, the obtaining module 701 is specifically configured to:
obtain a power dispatch request value; and
determine, based on the power dispatch request value and a total generated power of a power generation device, the total charge and discharge power.

In some embodiments, the control module 703 is specifically configured to:
for each battery cluster, send a sub charge and discharge power corresponding to the battery cluster to a DC/DC corresponding to the battery cluster, so as to control the DC/DC to perform charging and discharging with a power grid.

The charge and discharge power allocation apparatus for an energy storage device according to the embodiments of the present application may be configured to implement the technical solutions in the above embodiments of the charge and discharge power allocation method for an energy storage device according to the present application. The implementation principles and technical effects are similar, and the details will not be repeated here.

Various modules in the above image processing apparatus may be implemented entirely or partially by software, hardware, or a combination of software and hardware. The above modules may be embedded as hardware into or independent of a processor in the charge and discharge power allocation device, or may also be stored as software in a memory in the charge and discharge power allocation device to enable the processor to invoke the modules to perform corresponding operations to the modules.

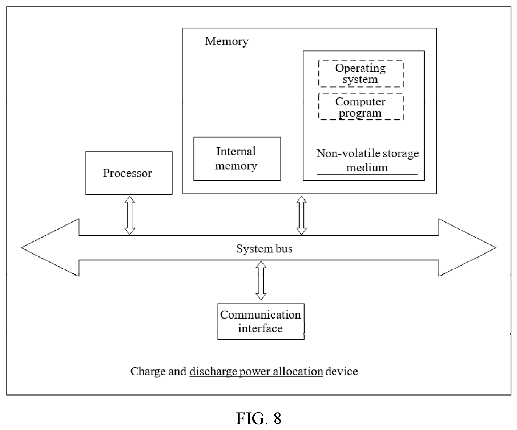

In some embodiments, FIG. 8 is a schematic structural diagram of a charge and discharge power allocation device according to some embodiments of the present application. As shown in FIG. 8, the charge and discharge power allocation device according to the embodiments of the present application may include a processor, a memory, and a communication interface connected by a system bus. The processor of the charge and discharge power allocation device is configured to provide computing and control capabilities. The memory of the computer device includes a non-volatile storage medium and an internal memory. The non-volatile storage medium stores an operating system and a computer program. The internal memory provides an environment for the operation of the operating system and the computer program in the non-volatile storage medium. The communication interface of the charge and discharge power allocation device is configured to communicate with an external device in a wired or wireless manner. The wireless manner may be implemented via Wi-Fi, a mobile cellular network, near field communication (NFC), or another technology. The computer program, when executed by the processor, causes the processor to implement the technical solutions in the above embodiments of the charge and discharge power allocation method for an energy storage device according to the present application. The implementation principles and technical effects are similar, and the details will not be repeated here.

It can be understood by those skilled in the art that the structure shown in FIG. 8 is a block diagram of only part of the structure associated with the embodiments of the present application, and does not constitute a limitation on the charge and discharge power allocation device to which the solutions of the present application are applied. The specific charge and discharge power allocation device may include more or fewer components than those shown in the figure, or may have certain components combined, or may have a different arrangement of components.

In some embodiments, a charge and discharge power allocation device for an energy storage device is further provided. The device includes a memory and a processor. The memory has a computer program stored therein, and the processor, when executing the computer program, implements the technical solutions in the above embodiments of the charge and discharge power allocation method for an energy storage device according to the present application. The implementation principles and technical effects are similar, and the details will not be repeated here.

In some embodiments, a computer-readable storage medium is further provided. The computer-readable storage medium has a computer program stored thereon. The computer program, when executed by a processor, causes the processor to implement the technical solutions in the above embodiments of the charge and discharge power allocation method for an energy storage device according to the present application. The implementation principles and technical effects are similar, and the details will not be repeated here.

In some embodiments, a computer program product is further provided. The computer program product includes a computer program. The computer program, when executed by a processor, causes the processor to implement the technical solutions in the above embodiments of the charge and discharge power allocation method for an energy storage device according to the present application. The implementation principles and technical effects are similar, and the details will not be repeated here.

It can be understood by those of ordinary skill in the art that all or part of the processes in the methods of the above embodiments may be implemented by executing a computer program to instruct the relevant hardware. The computer program may be stored in a non-volatile computer-readable storage medium. The computer program, when executed, may include the processes in the methods of the above embodiments. Any reference to a memory, a database, or other media used in the embodiments according to the present application can include at least one of a non-volatile memory and a volatile memory. The non-volatile memory may include a read-only memory (ROM), a magnetic tape, a floppy disk, a flash memory, an optical storage, a high-density embedded non-volatile memory, a resistive random access memory (ReRAM), a magnetoresistive random access memory (MRAM), a ferroelectric random access memory (FRAM), a phase change memory (PCM), a graphene memory, and the like. The volatile memory may include a random access memory (RAM), an external high-speed cache memory, and the like. By way of illustration and not limitation, RAM may be in various forms, such as a static random access memory (SRAM) or a dynamic random access memory (DRAM). The processor involved in the embodiments according to the present application may be a general-purpose processor, a central processing unit, a graphics processing unit, a digital signal processor, a programmable logic unit, a data processing logic unit based on quantum computation, etc., but is not limited thereto.

Finally, it should be noted that the above embodiments are only used to illustrate the technical solutions of the present application, rather than limit the same. Although the present application has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present application, and shall all fall within the scope of the claims and specification of the present application. In particular, the technical features mentioned in the embodiments can be combined in any manner, provided that there is no structural conflict. The present application is not limited to the specific embodiments disclosed herein, but encompasses all technical solutions falling within the scope of the claims.

## Claims

1. A charge and discharge power allocation method for an energy storage device, the method comprising:
obtaining a total charge and discharge power allocated to battery clusters in the energy storage device;
allocating, with optimizing charge and discharge efficiencies of the respective battery clusters of the energy storage device and balancing cycle counts among the battery clusters as allocation objectives, the total charge and discharge power, to obtain sub charge and discharge powers allocated to the respective battery clusters; and
controlling, based on the sub charge and discharge powers allocated to the respective battery clusters, the battery clusters to perform charging and discharging.

2. The method according to claim 1, wherein allocating, with optimizing the charge and discharge efficiencies of the respective battery clusters of the energy storage device and balancing the cycle counts among the battery clusters as allocation objectives, the total charge and discharge power, to obtain the sub charge and discharge powers allocated to the respective battery clusters comprises:
grouping, based on states of charge (SOCs) of the respective battery clusters, the battery clusters into at least one battery cluster group, wherein different battery cluster groups have different charge and discharge priorities;
determining, based on the total charge and discharge power and charge and discharge power limits corresponding to the respective battery cluster groups, at least one target battery cluster group for charging and discharging from the at least one battery cluster group, and target charge and discharge powers corresponding to the respective target battery cluster groups; and
for each target battery cluster group, allocating, with optimizing charge and discharge efficiencies of the respective battery clusters in the target battery cluster group and balancing cycle counts among the battery clusters as allocation objectives, a target charge and discharge power corresponding to the target battery cluster group, to obtain sub charge and discharge powers allocated to the respective battery clusters in the target battery cluster group.

3. The method according to claim 2, wherein allocating, with optimizing the charge and discharge efficiencies of the respective battery clusters in the target battery cluster group and balancing the cycle counts among the battery clusters as allocation objectives, the target charge and discharge power corresponding to the target battery cluster group, to obtain the sub charge and discharge powers allocated to the respective battery clusters in the target battery cluster group comprises:
obtaining an objective function, wherein the objective function comprises an imbalance degree term of historical charge and discharge capacities of the respective battery clusters in the target battery cluster group and a charge and discharge power loss term of the respective battery clusters in the target battery cluster group; and
solving, based on a preset constraint condition and with minimizing a value of the objective function as an objective, the objective function, to obtain the sub charge and discharge powers allocated to the respective battery clusters in the target battery cluster group.

4. The method according to claim 3, wherein obtaining the imbalance degree term of the historical charge and discharge capacities of the respective battery clusters in the target battery cluster group comprises:
obtaining, based on total historical charge and discharge capacities and corresponding sub charge and discharge powers of the respective battery clusters in the target battery cluster group, imbalance degrees of the historical charge and discharge capacities of the respective battery clusters in the target battery cluster group; and
obtaining, based on an energy storage system cost per unit of charge and discharge capacity and the imbalance degrees of the historical charge and discharge capacities of the respective battery clusters in the target battery cluster group, the imbalance degree term.

5. The method according to claim 3 or 4, wherein obtaining the charge and discharge power loss term of the respective battery clusters in the target battery cluster group comprises:
obtaining, based on an electricity price per unit of power and sub charge and discharge powers corresponding to the respective battery clusters in the target battery cluster group, the charge and discharge power loss term.

6. The method according to any one of claims 3 to 5, wherein the preset constraint condition comprises: a first power constraint condition and a second power constraint condition, wherein the first power constraint condition is that a sum of sub charge and discharge powers corresponding to the respective battery clusters in the target battery cluster group is equal to a target charge and discharge power corresponding to the target battery cluster group; and the second power constraint condition is that the sub charge and discharge powers are within a preset sub charge and discharge power limit range.

7. The method according to any one of claims 2 to 6, wherein determining, based on the total charge and discharge power and the charge and discharge power limits corresponding to the respective battery cluster groups, the at least one target battery cluster group for charging and discharging from the at least one battery cluster group, and the target charge and discharge powers corresponding to the respective target battery cluster groups comprises:
determining, based on the total charge and discharge power, a first candidate battery cluster having a highest charge and discharge priority from the at least one battery cluster group; and
if an absolute value of a charge and discharge power limit corresponding to the first candidate battery cluster is greater than an absolute value of the total charge and discharge power, using the first candidate battery cluster as the target battery cluster group, and using the total charge and discharge power as a target charge and discharge power corresponding to the target battery cluster group.

8. The method according to claim 7, wherein determining, based on the total charge and discharge power and the charge and discharge power limits corresponding to the respective battery cluster groups, the at least one target battery cluster group for charging and discharging from the at least one battery cluster group, and the target charge and discharge powers corresponding to the respective target battery cluster groups further comprises:
if the absolute value of the charge and discharge power limit corresponding to the first candidate battery cluster is not greater than the absolute value of the total charge and discharge power, using the first candidate battery cluster as a first target battery cluster group, and using the charge and discharge power limit corresponding to the first candidate battery cluster as a target charge and discharge power corresponding to the first target battery cluster group;
determining a second candidate battery cluster having a second-highest charge and discharge priority from the at least one battery cluster group; and
if an absolute value of a charge and discharge power limit corresponding to the second candidate battery cluster is greater than a preset absolute value, using the second candidate battery cluster as a second target battery cluster group, and using a difference between the total charge and discharge power and the charge and discharge power limit corresponding to the first candidate battery cluster as a target charge and discharge power corresponding to the second target battery cluster group, wherein the preset absolute value is an absolute value of the difference between the total charge and discharge power and the charge and discharge power limit corresponding to the first candidate battery cluster.

9. The method according to any one of claims 2 to 8, wherein grouping, based on the SOCs of the respective battery clusters, the battery clusters into the at least one battery cluster group comprises:
grouping, based on the SOCs of the respective battery clusters and a plurality of preset charge and discharge thresholds, the battery clusters into the at least one battery cluster group.

10. The method according to claim 9, wherein grouping, based on the SOCs of the respective battery clusters and the plurality of preset charge and discharge thresholds, the battery clusters into the at least one battery cluster group comprises:
determining, based on the total charge and discharge power, a plurality of target charge and discharge thresholds from the plurality of preset charge and discharge thresholds; and
grouping, based on the SOCs of the respective battery clusters and the plurality of target charge and discharge thresholds, the battery clusters into the at least one battery cluster group.

11. The method according to any one of claims 1 to 10, wherein obtaining the total charge and discharge power allocated to the battery clusters in the energy storage device comprises:
obtaining a power dispatch request value; and
determining, based on the power dispatch request value and a total generated power of a power generation device, the total charge and discharge power.

12. The method according to any one of claims 1 to 10, wherein controlling, based on the sub charge and discharge powers allocated to the respective battery clusters, the battery clusters to perform charging and discharging comprises:
for each battery cluster, sending a sub charge and discharge power corresponding to the battery cluster to a direct current (DC)-to-DC converter (DC/DC) corresponding to the battery cluster, so as to control the DC/DC to perform charging and discharging with a power grid.

13. A charge and discharge power allocation apparatus for an energy storage device, the apparatus comprising:
an obtaining module, configured to obtain a total charge and discharge power allocated to battery clusters in the energy storage device;
an allocation module, configured to allocate, with optimizing charge and discharge efficiencies of the respective battery clusters of the energy storage device and balancing cycle counts among the battery clusters as allocation objectives, the total charge and discharge power, to obtain sub charge and discharge powers allocated to the respective battery clusters; and
a control module, configured to control, based on the sub charge and discharge powers allocated to the respective battery clusters, the battery clusters to perform charging and discharging.

14. A charge and discharge power allocation device for an energy storage device, comprising a memory and a processor, the memory having a computer program stored therein, wherein the processor, when executing the computer program, implements steps of the method according to any one of claims 1 to 12.

15. A computer-readable storage medium having a computer program stored thereon, wherein the computer program, when executed by a processor, causes the processor to implement steps of the method according to any one of claims 1 to 12.
